# EUROPEAN PATENT SPECIFICATION

(11) **EP 1 945 330 B1**
(45) Date of publication and mention of the grant of the patent: **31.12.2014**
(21) Application number: 06808022.5
(22) Date of filing: 07.11.2006
(51) Int. Cl.: B01D 53/00, B01D 53/32, B01D 53/86

(54) **COMBINED TREATMENT OF GASEOUS EFFLUENTS BY COLD PLASMA AND PHOTOCATALYSIS**
KOMBINIERTE BEHANDLUNG VON GASFÖRMIGEN AUSTRAGSSTRÖMEN DURCH KALTES PLASMA UND PHOTOKATALYSE
TRAITEMENT COMBINE D'EFFLUENTS GAZEUX PAR PLASMA FROID ET PHOTOCATALYSE

(30) Priority: 07.11.2005 FR 0553358
(43) Date of publication of application: 23.07.2008
(73) Proprietor: Ahlstrom Corporation, 00180 Helsinki (FI); Centre National de la Recherche Scientifique, 75794 Paris Cedex 16 (FR); UNIVERSITE CLAUDE BERNARD - LYON 1, 69100 Villeurbanne (FR); Ecole Polytechnique, 91128 Palaiseau Cedex (FR); COMPAGNIE INDUSTRIELLE D'APPLICATIONS THERMIQUES C.I.A.T., 01350 Culoz (FR)
(72) Inventor: THEVENET, Frédéric, F-69003 Lyon (FR); PUZENAT, Eric, F-69006 Lyon (FR); GUILLARD, Chantal, F-01120 Thil (FR); DUSSAUD, Joseph, F-38780 Pont-Evêque (FR); CLAVEL, Roland, F-73420 Viviers du Lac (FR); RUTMAN, Emmanuel, F-73310 Serrieres En Chautagne (FR); HERRMANN, Jean-Marie, F-69300 Caluire (FR); ROUSSEAU, Antoine, F-75002 Paris (FR); GUAITELLA, Olivier, F-91440 Bure S/ Yvette (FR)
(74) Representative: Grosbois, Mathilde
(86) International application number: PCT/FI2006/050481
(87) International publication number: WO 2007/051912

(56) References cited:
- EP-A- 1 086 740
- EP-A- 1 258 281
- WO-A-00/71867
- US-A1- 2005 118 079
- DATABASE WPI Derwent Publications Ltd., London, GB; AN 2005-583710 XP002394916 & CN 1 614 322 A (BEIJING POLYTECHNIC UNIV) 11 May 2005 (2005-05-11)

## Description

The invention relates to a process and a device allowing the effective treatment of gaseous effluents, particularly volatile organic compounds (VOC), by combining cold plasma and photocatalysis techniques.

The invention is applicable in a large number of applications, particularly in chemical industry, agriculture and food industry, petrochemical industry, water purification, odor destruction, paint workshops, for both efficiency, economical and environmental reasons.

Cold plasma and photocatalysis are two technologies that are, in themselves, known and industrially applicable.

Photocatalysis is a chemical process involving a photocatalytic agent i.e. so called photocatalyst that is able to destroy the various organic pollutants present in air or water by a reaction provoked by UV photon excitation.

Schematically, the photocatalytic reaction is initiated by activating a semiconducting solid by UV radiation at a wavelength of less than 380 nanometers, provoking electronic changes within the semiconductor and leading to, in the presence of air or water, the creation of oxygen radicals at the surface of the semiconductor. These radicals attack the organic compounds adsorbed on the semiconductor and, by a succession of chemical reactions involving the oxygen from the air or water, degrade the organic compounds until the carbon of the carbon chains is completely transformed into carbon dioxide (CO₂).

The photocatalytic reaction is capable of destroying, according to the above described process, a large number of air pollutants, particularly NOₓ, NH₃, H₂S, CO, O₃, chlorinated or non-chlorinated alkenes in C₂-C₄, chloromethane, isooctane, benzene, toluene, xylenes, isopropylbenzene, saturated or unsaturated aliphatic alcohols, methylmercaptan, chlorphenols, nitrophenols, methyltertiobutylether, dimethoxymethane, aldehydes in C1-C4, acetone, formic acid, acetic acid, 2-methylpropanoic acid, dichloroacetyl chloride, dimethylformamide, trimethylamine, acetonitrile and pyridine.

In practice, titanium dioxide (Ti02) is used as a photocatalyst, activated by UV light. This UV radiation leads to, at the surface of the photocatalyst, the formation of hydroxyl radicals OH^{•-} and superoxide radicals O₂^{•} able to attack the organic compounds adsorbed on the TiO₂ and degrading such until complete mineralization of the organic matter.

However, it is possible to implement other photocatalytic agents such as, for example, those chosen from the group of metal oxides, alkaline-earth oxides, actinide oxides and rare earth oxides.

The utilization of photocatalysis for the treatment of gaseous effluents is for example described in the document WO 00/72945.

However, major limitations of photocatalysis reside in the fact that on the one hand, the photonic yield of this reaction is relatively low and on the other hand, certain compounds, in particular fluorinated compounds, may not be decomposed by this reaction.

The principle of cold plasma consists of generating, via a current pulse, very highly reactive primary chemical compounds (radicals, ions, excited species) as well as ultraviolet and visible photons. Therefore, it has been proposed to utilize plasma, and, particularly the very high energy of electrons thus generated, to break the bonds or cycles of molecules in the treatment of gaseous effluents.

In practice, cold plasma at atmospheric pressure is obtained by applying a high-voltage pulse between two electrodes in order to ionize the gas situated between the two electrodes, while preventing passage to the electric arc. To avoid the development of an electric arc, the prior art recommends one or two dielectric barriers comprised of an insulating material be placed between the two electrodes.

In a particular embodiment, a Dielectric Barrier Discharge (DBD) is implemented, comprised of plasma microfilaments ("streamer") that are established after propagation in an interelectrode space of an electric charge called a streamer. They have very short durations, on the order of several dozens of nanoseconds. Each microfilament is a narrow cylindrical channel (radius from 50 to 100 µm). The exchange of energy between accelerated electrons and molecules principally takes place in the streamer. The energetic electrons (several eV) excite the molecules and therefore transform a part of their kinetic energy into energy stored in the excited chemical compounds and the free radicals.

The utilization of cold plasma technology, in particular associated with DBD, has already been described for destroying VOC type molecules.

In addition, the prior art mentions the improvement in the treatment of VOC by practicing cold plasma at atmospheric pressure in the presence of a TiO₂ or MnO₂ type solid, then assimilated to a heterogeneous catalyst (Futamara et al., Catalysis Today 89 (2004) 89-95).

These two known technologies i.e. photocatalysis and cold plasma, have already been used in combination.

EP-A2-1 086 740 discloses a method of treating harmful substances contained in waste gas and an apparatus for carrying out the method. The problem discussed in the EP document relates to treating harmful substances using materials such as TiO₂ as photocatalytic agents, which need to be excited with ultraviolet radiation. The actual problem discussed in the EP publication is that the application of the photocatalysis requiring UV radiation is limited to outdoor use such as load fences, load surfaces and outer walls of buildings. Therefore, the photocatalysis cannot be utilized for purging waste gases emitted from city type incinerators and industrial waste treating plants. As a solution to the problem the EP document suggests that the treating efficiency can be improved by exciting a photocatalysis material with ultraviolet radiation emitted from the discharge plasma.

WO-A1-00/71867 discloses a somewhat similar system for the purification of exhaust gases; and, more particularly, for the purification of exhaust gases of an internal combustion engine of a vehicle using precious metals as a high temperature active catalysts. The purification system comprises a reactor including a honeycomb carrier having a plurality of carrier cells, each of which having a photocatalyst layer coated on a wall surface of each of the carrier cells, and a plasma generating means having a plurality of electrode cells and mounted on an inner end and an outer end of the honeycomb carrier. The photocatalyst layer is activated by the ultraviolet radiation emitted from the discharge plasma.

Given the efficiency, economic and environmental issues mentioned already above, an ongoing need exists for technical solutions allowing the performance of the destruction of organic compounds in the gaseous effluents of any origin to be improved. However, the performed experiments show that arranging photocatalyst surfaces in a reactor, and activating the photocatalyst by means of UV radiation originating from the plasma is not efficient enough to be industrially applicable, as the effect of the UV radiation emitted from the plasma seems to be marginal.

According to the present invention, combined treatment with cold plasma and photocatalysis with additional source of UV radiation is proposed. It turns out that these two technologies are perfectly complementary and compatible: the plasma allows the organic compounds, including halogens, to be destroyed while generating ozone; photocatalysis, activated by its own source of UV radiation in the presence of ozone, leads to faster mineralization of the organic compounds and to degradation of the ozone in the course of the process.

In fact, the Applicant shows a synergistic effect when these two technologies are combined for the treatment of gaseous effluents.

More precisely, the Applicant shows that the plasma + TiO₂ + (additional) UV treatment gives better results, in terms of degradation speed and residual VOC concentration, than the photocatalysis alone, plasma alone and plasma + photocatalysis treatment (UV originating from plasma). The high efficiency of the combination treatment of the invention allows the treatment of gaseous effluents at a higher flow rate, and/or at a higher concentration.

Therefore, the invention relates to a process for treating gaseous effluents consisting of submitting said effluents to simultaneous treatments with both cold plasma and photocatalysis under additional ultraviolet (UV) radiation.

This process presents an obvious interest in the treatment of gaseous effluents containing volatile organic compounds (VOC), notably halogenated organic solvents, generated by numerous human or industrial activities, such as painting.

The advantage of the claimed process also resides in the fact that the process allows effluents whose range of VOC concentrations varies from 1 ppbv to several thousand ppmv to be treated.

The combination of a homogeneous phase process (plasma) and a heterogeneous phase process (photocatalysis) presents various advantages. The combination allows:
- to preconcentrate the species on the photocatalyst surface and therefore promote their degradation;
- to increase the degradation of the molecules having little affinity for the photocatalyst surface;
- to increase the degradation of the molecules having a large affinity for the photocatalyst by concentrating the active compounds at the location where these molecules are adsorbed.

This combined treatment process may be carried out in different ways. The cold plasma treatment is preferably performed simultaneously (simultaneous coupling) with the photocatalysis treatment, but it may, depending on the substances to be treated, be also performed either prior to or after (sequential coupling) the photocatalysis treatment.

In the case of simultaneous coupling, the plasma is generated in contact with the catalyst. The additional UV radiation from a UV source promotes the excitation of the photocatalyst agent. In addition, the ozone generated by the cold plasma promotes the separation of electron/hole pairs in contact with the photocatalyst, and promotes the increased formation of active compounds such as OH^{•} and O₃^{•-}. The contribution of UV radiation and ozone therefore accelerates the mineralization process. Simultaneous coupling also has the advantage of regenerating photocatalyst by avoiding its possible contamination.

In the sequential approach, three configurations are possible: the plasma may be placed upstream or downstream from the photocatalysis with relation to the gaseous flow, or rather the two modes of treatment are located in the same location, but the treatment is sequential in time, by recirculation. In the case where it is placed upstream, the plasma is then used to create radicals that are then mineralized on the photocatalyst. Ozone, formed by the plasma, participates in the mineralization process by decomposing on the photocatalyst. This has the effect of improving photocatalysis since the electronic affinity of ozone is approximately 5 times greater than that of oxygen.

The plasma/photocatalysis sequential combination may be planned in three ways:
- the plasma (electrodes) device is situated upstream of the photocatalysis device (UV lamp + photocatalyst) in the conduit.
- the plasma device (electrodes) is situated downstream of the photocatalysis device (UV lamp + photocatalyst) in the conduit.
- the elements useful to the two treatments are superimposed in the conduit but the treatment is sequential in time: during a first passage, the effluents are subjected to the plasma then during a later passage, they are subjected to photocatalysis.

In all scenarios and without wanting to be linked to any theory, such advantageous results obtained by the Applicant may result in:
- faster mineralization due to the fragmentation of the molecules by the electrons and other active species produced by the plasma and the reaction of these fragments with the OH^{•} and O₂^{•-} species produced by photocatalysis;
- initiation of the breaking of the bond or cycle not degradable by photocatalysis due to the energy of the electrons formed in the plasma, the ions or radicals formed may then react with the oxidant species created by photocatalysis, leading to complete mineralization.

Therefore this process allows gaseous effluents comprising a VOC concentration between 1 ppbv and several thousand ppmv to be treated.

In a second feature, the invention relates to a device adapted for the implementation of such a process.

Mainly, such a device comprises:
- a conduit allowing passage of effluents, preferably made of a material ensuring the transmission of UV radiation.
- two advantageously metallic opposed electrodes, separated by one or two dielectrics. In one case where the electrodes are separated by a single dielectric, one of the two electrodes is situated inside the conduit, in the other case the two electrodes are situated on the outer surface of the conduit.
- In all configurations, the electrodes are connected to a generator delivering alternating voltage less than 50kV and from 1 to 1000 Hz.
- At least one lamp generating ultraviolet radiation (UV) directed towards the inside of the conduit. The lamp advantageously delivers a lighting intensity on the order of 50mW/cm².
- A photocatalyst situated inside the conduit, possibly between the two electrodes. It is advantageously comprised of titanium dioxide (TiO₂) and deposited on a fibrous support that may be a fiberglass, synthetic or natural organic fiber, or a non-woven based support. Preferably, the photocatalyst is deposited on the fibrous support by using SiO₂ particles, to form a layer or coating having preferably a basis weight of 5 to 40 g/m². This technology and all its variations are described in detail in document WO99/51345. Alternately, the photocatalyst may be deposited on the fibrous support by using the sol gel technique known to the person skilled in the art.

The UV source, normally at least one UV-lamp, positioned outside the conduit may be replaced with an UV source situated inside the conduit. An exemplary source of UV radiation capable of being inserted either inside or outside the conduit or reactor is an ultra violet light emitting diode (UV-LED). Another way of introducing UV radiation inside the conduit is the use of optical fibers. The basic principle is that the optical fibers are arranged in such a manner that they introduce the UV radiation to the best possible location in view of the operation of the photocatalyst. Thus, for instance, the optical fibers may be arranged to be part of the fibrous substrate carrying the photocatalyst, or to terminate at the surface of the photocatalyst layer on any surface it is coated on.

When the plasma and photocatalysis are performed simultaneously, it is important that the fibrous support coated with the photocatalyst does not disturb the plasma. Two configurations are then advantageously used: in a first optional configuration, the fibrous support coated with the photocatalyst is disposed perpendicularly to the electrodes and to the flow of the gaseous effluents, and then, it is presented in the form of a permeable support, or in the form of stacked honeycombs. In a second optional configuration, the fibrous support coated with the photocatalyst is disposed parallel to the electrodes and parallel to the flow of gaseous effluents, and is then presented in the form of a succession of layers that are parallel to each other.

The invention and resulting advantages stand out better in the following two examples of embodiments in support of the attached figures.

Figure 1 represents a schematic diagram of simultaneous cold plasma/photocatalysis coupling in a plane/plane electrode geometry.

Figure 2 represents the degradation of the model compound C₂H₂ according to the conditions of treatment from the device of example 1 described in Figure 1.

Figure 3 represents the comparison between the combined treatment of the invention and different treatments known in the prior art.

The present study was carried out on an alkyne with a triple carbon-carbon bond of the C₂H₂ formula. The study illustrates the simultaneous coupling of cold plasma and photocatalysis in a plane/plane geometry.

### A) Device utilized:

The used reactor 2 is a conduit made of Pyrex glass whose active part 4, 8 cm in length, presents a rectangular section. The conduit has at the ends of the active part 4 two large sized buffer volumes 6. Concerning the plasma part 5 of the device, two copper electrodes 8 of 20 cm² are affixed to the outside of the conduit 4. The electrodes 8 are thus positioned at a distance of 10 mm from each other, including 6 mm of gas and two times 2 mm of Pyrex glass. The Pyrex glass walls of the conduit form the dielectric barriers. This is a double dielectric barrier discharge that is initiated with the help of a generator 10 delivering an adjustable sinusoidal voltage of 30 kV at a fixed frequency of 50 Hz. Concerning the photocatalyst, this consists of a fiberglass weaving 12 coated with colloidal silica 14 ensuring the fixation of 20 g/m² of titanium dioxide. The photocatalytic media is then placed in the active part 4 of the reactor 2 in the gap between the electrodes 8. Four PLL40 type Philips UV lamps 16 are disposed symmetrically at a distance of 8 cm around the reactor in order to provide additional UV radiation to the photocatalyst, if necessary. The test arrangement further comprises gas sources shown in upper left corner of the drawing. In other words, for test purposes acetylene is mixed with dry air to result in a gas mixture having a desired acetylene concentration, whereafter the mixture is taken into the reactor 2. The piping in connection with the reactor is arranged such that the reactor may be run in two modes. In a continuous mode pump 18 is used to draw the gas mixture through the reactor 4 and to the gas chromatograph for analyzing purposes, whereafter the gas is discharged from the system. In a recirculation mode the device works in a similar manner up to the gas chromatograph. However, after the gas chromatograph the gas mixture is recirculated back to the reactor such that a closed circulation is created.

### B) Conditions of utilization of the device:

The experiments carried out with the help of this device in the presented example were performed in "recirculation" mode, ensured by a pump 18. A flow of 180 ml/min continuously flows through the reactor 2 until complete degradation of the pollutant. The initial concentration of the chosen pollutant is 3000 ppm. The destruction of this pollutant, acetylene, was followed under four particular conditions: action of the photocatalyst alone, activated by UV radiation from external lamps; action of plasma alone, without photocatalytic material and additional UV radiation; action of the plasma and the photocatalytic material without additional UV radiation; and lastly, action of the plasma and of the photocatalytic material with additional UV radiation. When the plasma participates the process, the specific energy of plasma is adjusted to 60 J/l. The calculations of the injected specific energy are performed by the conventional method called the Manley method. When the additional UV radiation is used in the process, its average intensity is 3 mW/cm² for a 365 nm wavelength.

### C) Results:

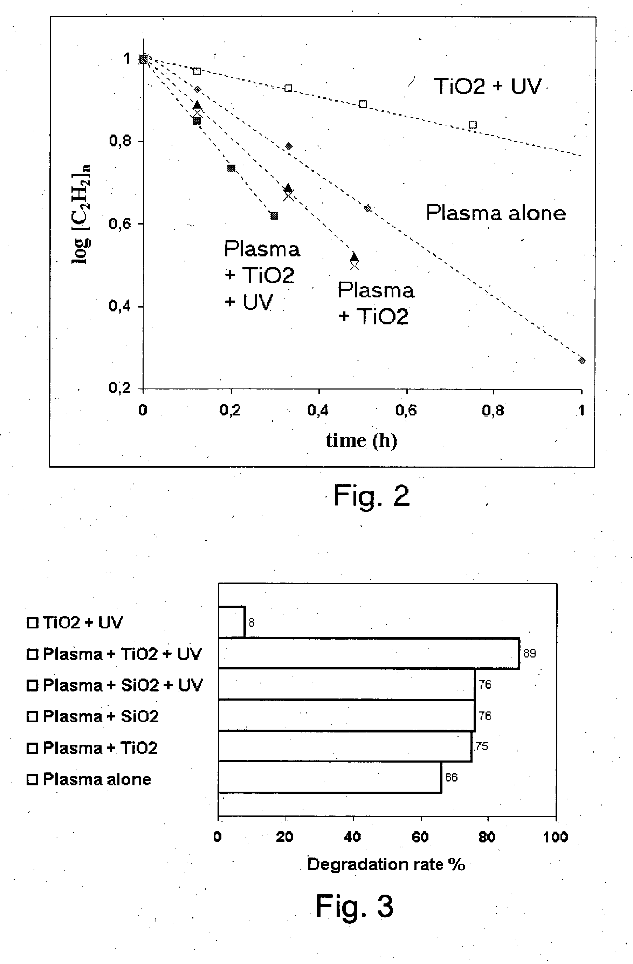

Figure 2 presents the evolution of the acetylene concentration in the reactor described above, as a function of time for the four aforementioned experimental conditions. The comparison of the curve relative to photocatalysis alone (TiO₂+ external UV) with that relative to plasma alone shows very different kinetics that distinguish the two processes. By comparing the curve relative to the plasma process alone and that relative to the plasma + TiO₂ process, a significant improvement in the effectiveness of the destruction of acetylene is observed. This phenomenon is connected on the one hand to the activation of the photocatalytic material by the UV radiation generated in the plasma medium, and on the other hand to the effect of the porous surface introduced in the cold plasma that stabilizes the active species and concentrates the carbon fragments at the surface of the activated material. Lastly, the comparison of the curves relative to the plasma + TiO₂ + external UV process and relative to the plasma + TiO₂ process shows that it is possible to activate the photocatalytic solid in situ with the external UV lamps giving artificial UV radiation and to thus increase its activity in the discharge.

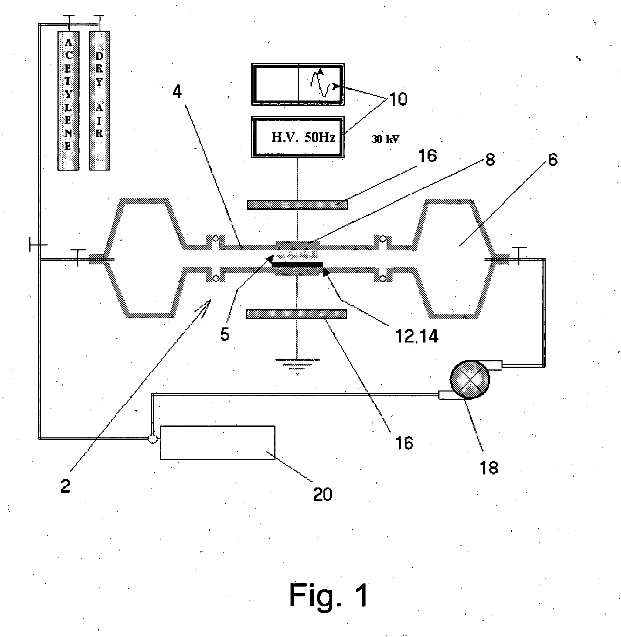

Figure 3 discusses a series of experiments aiming at more clear comparison between the various treatments. This test was carried out such that a volume of 1,5 liter of C₂H₂ laden gas was circulated by means of the pump 18 in the reactor 4 of Fig. 1 for a test period of 7,5 minutes. Six different experiments were run. Two experiments relate to conventional methods, i.e. photocatalysis alone (TiO₂ + UV), which requires the use of external/additional artificial UV-light; and plasma alone. The comparative experiments were as follows: plasma together with a fibrous substrate coated with 20 g/m² TiO₂ and 20 g/m² SiO₂ (Plasma + TiO₂), plasma together with a fibrous substrate coated with 40 g/m² SiO₂ (Plasma + SiO₂), plasma together with a fibrous substrate coated with 40 g/m² SiO₂ with additional UV light (Plasma + SiO₂ + UV), plasma together with a fibrous substrate coated with 20 g/m² TiO₂ and 20 g/m² SiO₂ with UV-light (Plasma + TiO₂ + UV). When using TiO₂ in connection with plasma the titanium dioxide particles having an average diameter of 100 nanometers were wrapped by silicon dioxide particles having an average diameter of 20 nanometers. I.e. the silicon dioxide particles acted as binders for attaching the TiO₂ particles on the substrate. At the end of each test period the acetylene concentration was determined by means of gas chromatography. The table in Fig. 3 shows the relative amount of acetylene left at the end of each test period.

If we take the two known treatments i.e. plasma alone and photocatalysis alone as the starting point of the invention, we see that the degradation rate of plasma alone is 66 %, and photocatalysis alone 8 %. Thus the theoretical combined effect should be 66 + 8 = 74%. For studying the effect of UV radiation created by the plasma the effect of plasma together with both SiO₂ and TiO₂, 20 g/m² each, without external UV light, is compared to plasma together with SiO₂, 40 g/m² alone, and plasma together with both SiO₂ (40 g/m²) and external UV radiation, where there is, in practice, no difterence. Since SiO₂ is a mere adsorbent the external UV radiation has no effect on its function (with and without UV give the same 76 % degradation rate). However, the result concerning the use of TiO₂ (in fact both SiO₂ and TiO₂) together with plasma and without additional UV radiation are interesting. Now that TiO₂ is, by its nature, both a photocatalyst and an adsorbent, the specific areas of the coatings (SiO₂ and TiO₂) of the substrate have to be taken into account. Since the SiO₂ particles are, as already discussed above, much smaller than the TiO₂ particles, the specific surface area of the TiO₂ particles is much smaller. Thus the capacity of the TiO₂/SiO₂ coating to adsorb impurities is significantly smaller than that of a coating having an equal basis weight and being composed merely of SiO₂. However, the degradation rate of 75 % of the TiO₂ /SiO₂ coating is substantially the same as that of 76% of the pure SiO₂ coating. The only explanation for this feature is that the UV radiation created by the plasma is able to penetrate the SiO₂ coating to the TiO₂ particles and initiate photocatalysis that compensates the smaller specific surface area of the adsorbents. Finally, the combination treatment with plasma and photocatalysis provided with external UV radiation give the degradation rate of 89 %. When compared with the arithmetically calculated theoretical sum of 74 % for the degradation rate (discussed already above) it is easy to see that the simultaneous treatments with both plasma and photocatalysis with additional UV radiation resulting in surprisingly better degradation rate of 89 % bring synergistic effects, which were nor foreseeable prior to the performed experiments.

## Claims

1. A device for treating gaseous effluents, the device comprising
• a conduit (4) allowing the passage of effluents;
• two metal electrodes (8) having at least one dielectric barrier in a gap therebetween and arranged in connection with the conduit (4), the electrodes (8) being connected to a generator (10);
• at least one ultraviolet (UV) radiation source (16); and
• means for introducing ultraviolet (UV) radiation in said gap between the electrodes (8); the device being **characterized in**
• a photocatalyst deposited on a fibrous support (12) and situated inside the conduit (4) in said gap.

2. The device according to claim 1, **characterized in that** both electrodes (8) are positioned outside the conduit (4).

3. The device according to claim 1, **characterized in that** the conduit (4) is manufactured of a material that is transparent to ultraviolet radiation, and that said means for introducing UV-radiation is at least one lamp (16) generating ultraviolet (UV) radiation situated outside but directed toward the inside of the conduit (4).

4. The device according to claim 1, **characterized in that** said means for introducing UV-radiation is at least one UV-LED arranged in the nearhood of said photocatalyst.

5. The device according to claim 1, **characterized in that** said means for introducing UV-radiation is at least one optical fibre capable of transmitting UV-radiation in the nearhood of said photocatalyst.

6. The device according to claim 1, **characterized in that** the generator (10) delivers alternating voltage between 1 Hz and 1000 Hz, and with maximum voltage of 50kV.

7. The device according to one of claims 1 to 6, **characterized in that** the UV lamp (16) has a lighting intensity on the order of 50mW/cm².

8. The device according to one of claims 1 to 7, **characterized in that** the photocatalyst is chosen from the group of metal oxides, alkaline-earth oxides, actinide oxides and rare earth oxides.

9. The device according to one of claims 1 to 8, **characterized in that** the photocatalyst is titanium dioxide (TiO₂).

10. The device according to one of claims 1 to 9, **characterized in that** the photocatalyst is deposited on a fibrous support (12) by using SiO₂ particles, forming a layer having a basis weight of 5 to 40 g/m².

11. The device according to any of claims 8 - 10, **characterized in that** the fibrous support (12) is comprised of fiberglass, synthetic or natural organic fibers, or the fibrous support is a non-woven support.

12. The device according to one of claims 1 to 11, **characterized in that** the fibrous support (12) coated with a photocatalyst is disposed perpendicular to the electrodes (8) and to the flow of gaseous effluents.

13. The device according to claim 12, **characterized in that** the support (12) is presented in the form of a permeable support, or in the form of stacked honeycombs.

14. The device according to one of claims 1 to 13, **characterized in that** the fibrous support (12) coated with a photocatalyst agent is disposed parallel to the electrodes (8) and parallel to the flow of gaseous effluents and that the support is presented in the form of a succession of parallel layers.

15. A process taking place in a device according any one of claims 1 - 15 for treating gaseous effluents by subjecting said effluents to simultaneous treatment with cold plasma and photocatalysis under ultraviolet (UV) radiation of non-plasma origin in a reactor (2), **characterized by** positioning a fibrous support (12) coated with a photocatalyst in said reactor (2) between said electrodes (8).

16. The process for treating gaseous effluents according to claim 15, **characterized in that** the gaseous effluents comprise volatile organic compounds, particularly halogenated organic solvents.

17. The process for treating gaseous effluents according to claim 15 or 16, **characterized in that** the process allows gaseous effluents comprising a VOC concentration between 1 ppbv and several thousand ppmv to be treated.

18. The process for treating gaseous effluents according to claim 15, **characterized by** arranging an UV-source inside the reactor (2).

19. The process for treating gaseous effluents according to claim 18, **characterized in that** the UV-source is a UV lamp or UV-LED.

20. The process for treating gaseous effluents according to claim 18, **characterized by** bringing the UV radiation from the UV source into the reactor (2) by means of optical fibers.

## Patentansprüche

1. Vorrichtung zum Behandeln von Abgasen, wobei die Vorrichtung umfasst
• einen Kanal (4) zum Durchleiten von Abgasen;
• zwei Metallelektroden (8), die mindestens eine dielektrische Barriere in einem zwischen ihnen angeordneten Spalt aufweisen und in Verbindung mit dem Kanal (4) angeordnet sind, wobei die Elektroden (8) mit einem Generator (10) verbunden sind;
• mindestens eine Ultraviolett(UV)-Strahlungsquelle (16); und
• Mittel zum Einführen einer Ultraviolett(UV)-Strahlung in den Spalt zwischen den Elektroden (8), wobei die Vorrichtung **gekennzeichnet ist durch**
• einen Photokatalysator, der auf einen Faserträger (12) abgeschieden ist und innerhalb des Kanals (4) in dem Spalt angeordnet ist.

2. Vorrichtung nach Anspruch 1, **dadurch gekennzeichnet, dass** die zwei Elektroden (8) außerhalb des Kanals (4) angeordnet sind.

3. Vorrichtung nach Anspruch 1, **dadurch gekennzeichnet, dass** der Kanal (4) aus einem Material hergestellt ist, das für Ultraviolett-Strahlung transparent ist, und dass die Mittel zum Einführen einer UV-Strahlung als mindestens eine Ultraviolett(UV)-Strahlung erzeugende Lampe (16) ausgebildet sind, die außerhalb angeordnet ist, aber in das Innere des Kanals (4) gerichtet ist.

4. Vorrichtung nach Anspruch 1, **dadurch gekennzeichnet, dass** die Mittel zum Einführen einer UV-Strahlung als mindestens eine UV-LED ausgebildet sind, die in der Nähe des Photokatalysators angeordnet ist.

5. Vorrichtung nach Anspruch 1, **dadurch gekennzeichnet, dass** die Mittel zum Einführen einer UV-Strahlung als mindestens eine optische Faser ausgebildet sind, die geeignet ist, UV-Strahlung in die Nähe des Photokatalysators zu übertragen.

6. Vorrichtung nach Anspruch 1, **dadurch gekennzeichnet, dass** der Generator (10) eine Wechselspannung zwischen 1 Hz und 1000 Hz mit einer maximalen Spannung von 50 kV liefert.

7. Vorrichtung nach einem der Ansprüche 1 bis 6, **dadurch gekennzeichnet, dass** die UV-Lampe (16) eine Lichtintensität in der Größenordnung von 50 mW/cm² aufweist.

8. Vorrichtung nach einem der Ansprüche 1 bis 7, **dadurch gekennzeichnet, dass** der Photokatalysator ausgewählt aus der Gruppe der Metalloxide, Erdalkalioxide, Aktinoidoxide und Seltene-Erden-Oxide.

9. Vorrichtung nach einem der Ansprüche 1 bis 8, **dadurch gekennzeichnet, dass** der Photokatalysator Titaniumdioxid (TiO₂) ist.

10. Vorrichtung nach einem der Ansprüche 1 bis 9, **dadurch gekennzeichnet, dass** der Photokatalysator auf einem Faserträger (12) unter Verwendung von SiO₂ Partikel abgeschieden wird, wobei eine Schicht mit einem Flächengewicht von 5 bis 40 g/m² gebildet wird.

11. Vorrichtung nach einem der Ansprüche 8 bis 10, **dadurch gekennzeichnet, dass** der Faserträger (12) aus Glasfasern, synthetischen oder natürlichen organischen Fasern gebildet wird oder dass der Faserträger ein Non-Woven-Träger ist.

12. Vorrichtung nach einem der Ansprüche 1 bis 11, **dadurch gekennzeichnet, dass** der mit einem Photokatalysator beschichtete Faserträger (12) senkrecht zu den Elektroden (8) und zu dem Strom von Abgasen angeordnet ist.

13. Vorrichtung nach Anspruch 12, **dadurch gekennzeichnet, dass** der Träger (12) in Form eines permeablen Trägers oder in Form eines gestapelten Wabenkörpers vorliegt.

14. Vorrichtung nach einem der Ansprüche 1 bis 13, **dadurch gekennzeichnet, dass** der mit einem Photokatalysator beschichtete Faserträger (12) parallel zu den Elektroden (8) und parallel zu dem Strom von Abgasen angeordnet ist, und dass der Träger in Form einer Folge von parallelen Schichten vorliegt.

15. Verfahren, dass in einer Vorrichtung nach einem der Ansprüche 1 bis 15 zum Behandeln von Abgasen stattfindet, indem die Abgase einer gleichzeitigen Behandlung mit kaltem Plasma und einer Photokatalyse bei Ultraviolett(UV)-Strahlung eines Ursprungs, der kein Plasma ist, in einem Reaktor (2) unterworfen werden, **gekennzeichnet durch** Positionieren eines mit einem Photokatalysator beschichteten Faserträgers (12) in dem Reaktor (2) zwischen die Elektroden (8).

16. Verfahren zum Behandeln von Abgasen nach Anspruch 15, **dadurch gekennzeichnet, dass** die Abgase flüchtige organische Verbindungen, insbesondere halogenierte organische Lösungsmittel umfassen.

17. Verfahren zum Behandeln von Abgasen nach Anspruch 15 oder 16,
**dadurch gekennzeichnet, dass** das Verfahren eine Behandlung von Abgasen gestattet, die eine VOC-Konzentration zwischen 1 pbv und einigen Tausend ppmv aufweisen.

18. Verfahren zum Behandeln von Abgasen nach Anspruch 15, **gekennzeichnet durch** Anordnen einer UV-Quelle innerhalb des Reaktors (2).

19. Verfahren zum Behandeln von Abgasen nach Anspruch 18, **dadurch gekennzeichnet, dass** die UV-Quelle eine UV-Lampe oder eine UV-LED ist.

20. Verfahren zum Behandeln von Abgasen nach Anspruch 18, **gekennzeichnet durch** Einführen der UV-Strahlung von der UV-Quelle in den Reaktor (2) mittels optischer Fasern.

## Revendications

1. Dispositif pour traiter des effluents gazeux, le dispositif comprenant :
. un conduit (4) permettant le passage des effluents ;
. deux électrodes métalliques (8) comportant au moins une barrière diélectrique dans un espace entre elles et agencées en relation avec le conduit (4), les électrodes (8) étant connectées à un générateur (10) ;
. au moins une source de rayonnement ultraviolet (UV) (16) ; et
. des moyens pour introduire le rayonnement ultraviolet (UV) dans ledit espace entre les électrodes (8) ; le dispositif étant **caractérisé par**
. un photocatalyseur déposé sur un support fibreux (12) et situé à l'intérieur du conduit (4) dans ledit espace.

2. Dispositif selon la revendication 1, **caractérisé en ce que** les deux électrodes (8) sont positionnées à l'extérieur du conduit (4).

3. Dispositif selon la revendication 1, **caractérisé en ce que** le conduit (4) est fabriqué en un matériau qui laisse passer les rayonnements ultraviolets, et **en ce que** lesdits moyens pour introduire un rayonnement UV sont au moins une lampe (16) générant un rayonnement ultraviolet (UV) située à l'extérieur, mais dirigée vers l'intérieur du conduit (4).

4. Dispositif selon la revendication 1, **caractérisé en ce que** lesdits moyens pour introduire un rayonnement UV sont au moins une DEL UV agencée dans le voisinage dudit photocatalyseur.

5. Dispositif selon la revendication 1, **caractérisé en ce que** lesdits moyens pour introduire un rayonnement UV sont au moins une fibre optique capable de transmettre un rayonnement UV dans le voisinage dudit photocatalyseur.

6. Dispositif selon la revendication 1, **caractérisé en ce que** le générateur (10) délivre une tension alternative entre 1 Hz et 1000 Hz, et avec une tension maximum de 50 kV.

7. Dispositif selon l'une des revendications 1 à 6, **caractérisé en ce que** la lampe UV (16) a une intensité d'éclairage de l'ordre de 50 mW/cm².

8. Dispositif selon l'une des revendications 1 à 7, **caractérisé en ce que** le photocatalyseur est choisi dans le groupe des oxydes métalliques, des oxydes alcalino-terreux, des oxydes d'actinides et des oxydes des terres rares.

9. Dispositif selon l'une des revendications 1 à 8, **caractérisé en ce que** le photocatalyseur est le dioxyde de titane (TiO₂).

10. Dispositif selon l'une des revendications 1 à 9, **caractérisé en ce que** le photocatalyseur est déposé sur un support fibreux (12) en utilisant des particules de SiO₂, formant une couche ayant un poids de base de 5 à 40 g/m².

11. Dispositif selon l'une quelconque des revendications 8 à 10, **caractérisé en ce que** le support fibreux (12) est composé de fibres de verre, de fibres organiques synthétiques ou naturelles, ou le support fibreux est un support non tissé.

12. Dispositif selon l'une des revendications 1 à 11, **caractérisé en ce que** le support fibreux (12) revêtu d'un photocatalyseur est disposé perpendiculairement aux électrodes (8) et à l'écoulement des effluents gazeux.

13. Dispositif selon la revendication 12, **caractérisé en ce que** le support (12) est présenté sous la forme d'un support perméable, ou sous la forme de nids d'abeilles empilés.

14. Dispositif selon l'une des revendications 1 à 13, **caractérisé en ce que** le support fibreux (12) revêtu d'un agent photocatalyseur est disposé parallèlement aux électrodes (8) et parallèlement à l'écoulement des effluents gazeux et **en ce que** le support est présenté sous la forme d'une succession de couches parallèles.

15. Procédé ayant lieu dans un dispositif selon l'une quelconque des revendications 1 à 15 pour traiter des effluents gazeux en soumettant simultanément lesdits effluents à un traitement avec un plasma froid et à une photocatalyse sous rayonnement ultraviolet (UV) d'origine non plasmatique dans un réacteur (2), **caractérisé par** le positionnement d'un support fibreux (12) revêtu d'un photocatalyseur dans ledit réacteur (2) entre lesdites électrodes (8).

16. Procédé pour traiter des effluents gazeux selon la revendication 15, **caractérisé en ce que** les effluents gazeux comprennent des composés organiques volatiles, en particulier des solvants organiques halogénés.

17. Procédé pour traiter des effluents gazeux selon la revendication 15 ou 16, **caractérisé en ce que** le procédé permet le traitement des effluents gazeux ayant une concentration de COV entre 1 ppbv et plusieurs milliers de ppmv.

18. Procédé pour traiter des effluents gazeux selon la revendication 15, **caractérisé par** l'agencement d'une source UV à l'intérieur du réacteur (2).

19. Procédé pour traiter des effluents gazeux selon la revendication 18, **caractérisé en ce que** la source UV est une lampe UV ou une DEL UV.

20. Procédé pour traiter des effluents gazeux selon la revendication 18, **caractérisé par** le transport du rayonnement UV de la source UV dans le réacteur (2) au moyen de fibres optiques.
